# EUROPEAN PATENT SPECIFICATION

(11) **EP 0 631 677 B1**
(45) Date of publication and mention of the grant of the patent: **02.01.1997**
(21) Application number: 93905511.7
(22) Date of filing: 04.03.1993
(51) Int. Cl.: G06T 11/60

(54) **METHOD OF AND APPARATUS FOR STORING AND DISPLAYING A DOCUMENT**
VERFAHREN UND GERÄT UM EIN DOKUMENT ZU SPEICHERN UND ANZUZEIGEN
PROCEDE ET APPAREIL DE MISE EN MEMOIRE ET DE VISUALISATION DE DOCUMENTS

(30) Priority: 04.03.1992 GB 9204678
(43) Date of publication of application: 04.01.1995
(73) Proprietor: EDEN GROUP LIMITED, Rainow, Cheshire SK10 5XF (GB)
(72) Inventor: RANDALL, Stephen, London NW8 (GB)
(86) International application number: GB9300454
(87) International publication number: WO9318467

(56) References cited:
- EP-A- 0 327 931
- GB-A- 2 157 036
- PATENT ABSTRACTS OF JAPAN vol. 12, no. 309 (P-748)23 August 1988 & JP-A-63 079 178

## Description

### Field of the Invention

This invention relates to a method of and apparatus for storing and displaying a document and in particular to such a method and apparatus that provides for data reduction of the document whilst still allowing for the rapid retrieval and display of selected portions of the document. This facilitates rapid reading comprehension of the outline meaning of the document or finding the location of desired sections within the document.

### Description of the prior art

Electronic storage and retrieval of texts and images is well known, finding wide usage wherever text or image documents have to be stored in a manner that allows fast subsequent access, as for example, with commercial databases such as those that store and allow retrieval of patent information. Personal computers with word processing programs also allow electronic text storage and retrieval. More recently, portable CD-ROM readers, such as the Sony Data Discman (Regd. Trademarks) are more specifically dedicated to this task.

One of the advantages of electronic, as opposed to print based, storage of documents is that electronic systems can incorporate intelligent features. For example, it is generally possible to interrogate a remote commercial computer database using keyword searching from the user's terminal to locate only those references that contain a specified keyword. Once the relevant document or documents are located on the remote host computer, a copy may be displayed at the user's access terminal. Often, the keyword specified will be highlighted against the text of the rest of the document to guide the user to the relevant portions of the text. One problem with this approach is that the full text of the document is supplied and displayed. This process can be 5 unnecessarily slow and expensive since extraneous text may not only have to be retrieved from storage in the host, but this extraneous text has to be transmitted and displayed. Scrolling through the full text to locate the highlighted words can also be slow. In addition, the less disciplined reader will probably not move straight to the highlighted keyword to check for relevancy of context but may instead waste time reading the extraneous text too. Further , it is anticipated that electronic successors to conventional approaches to text storage, such as books and newspapers, will have to offer the user specific advantages over their conventional counterparts. Currently, these electronic equivalents rely on the CD-ROM format, which gives the advantage of allowing very considerable amounts of information to be stored on a compact disc, thus giving the advantages of compactness and speed of access that printed documents cannot match. Nevertheless, current authoring systems for CD-ROM, such as Philips CDAS 1, do not offer any advance over the approach already referred to in providing for rapid retrieval and display of selected portions of stored text to facilitate rapid reading comprehension of the outline meaning of the stored document or location of desired sections within the document.

The prior includes EP-A- 0327931, which describes a system for storing and displaying images of reduced size. Reference may also be made to GB-A-2157036 in which medical images of human patient body organs are combined with text data relating to the patient or organ. In neither application is any mention made of reduced data size documents containing selected portions of the original document separated by space or patterns occupying very little data space and in which the layout of the original document is preserved.

### Statement of the Invention

In accordance with the present invention, a method of displaying selected portions of an original document, in which the original document comprises text or graphics arranged in a layout, comprises the steps of:
dividing the original document into (a) selected portions which are to be displayed and (b) text or graphics portions which are not to be displayed and are instead to be removed;
generating at least one space or pattern corresponding in length and/or shape to the text or graphics which are to be removed, each space or pattern being described by less data than is needed to describe the text or graphics which are to be removed;
displaying on a screen only the selected portions, said selected portions being arranged in the same layout that each portion had in the original document and being separated from other selected portions by at least one of said generated space or pattern.

By replacing the non-selected parts of the document, be they text or images, with a pattern or image that is compact in data length terms, rapid retrieval and display of selected portions of the document is achieved. When the user finds a region of the document that he wants to read or view in its entirety, then he can cease to view the text or images displayed in accordance with the present invention and start to view the region in the conventional manner, i.e. with all words displayed or with full detail of the graphics.

Preferably, where the remaining portions are of text, then the replacement pattern is a rectangular bar. On a monochrome screen, the bar may comprise a dot pattern chosen to give the bar a neutral mid-grey appearance. On greyscale or color screens, a similar neutral tone would be chosen. When the remaining portions are graphics, those graphics may be displayed in a reduced form, such as in outline only or with three pixels in four removed. Since graphics are an important part of most documents that contain them, in the present invention reduced form graphics are preferably always displayed. Thus whenever the invention so that incidental text is replaced by a grey bar pattern, then reduced form graphics will also be displayed.

The advantage of preserving the layout of the original document may be a very significant one for the user.

Generally, the choice of what portions of the whole document should be regarded as selected portions, is performed by the document author or editor or by the reader. The purpose of selection is to facilitate rapid reading comprehension of the outline meaning of the stored document or location of desired sections within the document. For example, the selected portions could correspond to keywords as defined by an author or editor or reader so that the reader could gain an outline view of the remaining of the document and the spatial organisation of key sections, i.e. where they re to be found on any given page and approximately how far in to a document they are to be found. Another approach is for the selected text to allow speed reading of the document, by for example, the selected text comprising the first six words and the verb of each sentence.

Conveniently, the selected portions and the space or pattern corresponding in length and/or shape to a part of the text or graphics which are to be removed are stored in a separate file distinct from a file containing the data representing the whole contents of the document. This is preferable since the separate file will be very much smaller than the file containing the full text. It can therefore be transferred much more quickly and can be displayed much more quickly than the full document. The user can also scroll through pages of such a condensed form of the document very much faster than he could the full version. An alternative approach is to flag the selected text data portions. This may be more desirable where there is insufficient space for a separate file dedicated to selected text portions. The programming techniques are well known in the art, within the compass of the skilled implementer and will not be detailed here.

The present invention may be implemented in software or firmware and may operate on a conventional computer.

In a further aspect, the present invention relates to a method of storing an original document, in which the original document comprises text or graphics arranged in a layout, comprising the steps of:
dividing the original document into (a) selected portions which are to be displayed and (b) text or graphics portions which are not to be displayed and are instead to be removed;
generating at least one space or pattern corresponding in length and/or shape to the text or graphics which are to be removed, each space or pattern being described by less data than is needed to describe the text or graphics which are to be removed;
recording onto a recordable media the original document and said space or pattern such that the recordable media allows the display on a screen of only the selected portions of the original document, said selected portions being arranged in the same layout that each portion had in the original document and being separated from other selected portions by at least one of said generated space or pattern.

In another aspect, the present invention relates to a computer apparatus for displaying selected portions of an original document, in which the original document comprises text or graphics arranged in a layout, comprising:
a data store in which the original document is stored, the data store also storing data indicative of selected portions of the original document;
a processor to generate on a display at least one space or pattern substantially equal in length and/or shape to text or graphics which are to be removed from the original document, each space or pattern being described by less data than is needed to describe the text or graphics which is to be removed;
a display to display those selected portions, said selected portions being displayed in the same layout that each portion had in the original document and being separated from other selected portions by at least one of said space or pattern generated by the processor.

### Brief Description of the Drawings

The invention will now be described with reference to the accompanying drawings in which:
Figure 1 shows the screen display of an apparatus in accordance with the present invention showing a full page of text and graphics at full resolution;
Figure 2 shows such a screen display in which selected keywords appear, with the remaining text replaced by dot patterned bars and the graphic shown at reduced resolution.

### Detailed Description

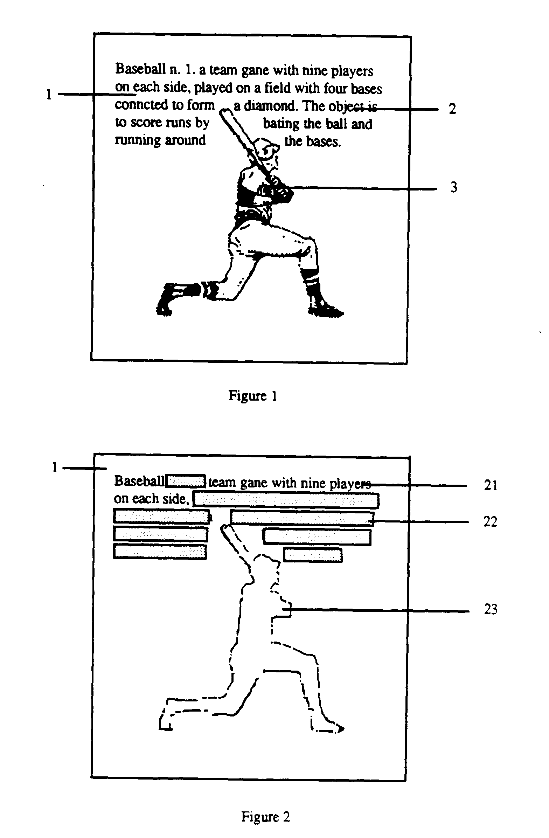

Referring now to Figure 1, there is shown generally at 1 the screen display of a conventional display such as a LCD display. On the screen is displayed text 2 and a graphic 3. The hardware and programs required to provide this are very well known in the computing arts and will not be further described here. This screen display is to be contrasted with the screen display of the same document using the approach of the present invention as illustrated by Figure 2. In Figure 2, the text now comprises selected keywords 21 separated by non-symbolic bars 22, together with an outline graphic 23 derived from the image 3. Since the bars and the outline can each be defined in far fewer bytes than the words and images they replace, the document illustrated by the screen image shown in Figure 2 can be defined with fewer bytes than the full version of the document as shown in Figure 1. Consequently, it can be both retrieved from the conventional data storage medium the device uses, typically CD-ROM for a self-contained hand held device, far more quickly and can be written to the screen more quickly too. Consequently, the user can scroll through the data reduced document faster as well.

It is envisaged that the present invention will be incorporated into a wide variety of devices that can access and display text or graphics. For example, it is implementable on the host computers of on-line databases and may then be selected by a command word in the way that other, currently available display formats can be chosen. Additionally, where the text is stored on CD-ROM and the reader has his own CD-ROM reader, then the features of the present invention may be incorporated into each CD-ROM sold by providing for the flagging of selected text, e.g. keywords, or their inclusion, together with data reduced forms of any graphics in the document, in a separate file distinct from the main text file. The reader will have to load the CD-ROM into a reader that can comprehend the flagging or separate file for selected text and the data reduced graphics and then has the choice of viewing the document in accordance with the present invention in order to browse, speed read or navigate to a specific point within the document. In addition, the CD-ROM is immediately readable in the conventional sense, i.e pages of text and pictures are viewable and every page can be accessed by using a variety of methods that are common today such as selecting a scroll bar or next page key.

If the user wants to get a quick overview as to the contents of the book, or to view the book in a mode where various key contextual elements are highlighted, he/she will need to invoke the controlling circuitry or application program that allows for operation in accordance with the invention. The reader will be presented, from a conventional screen display menu or dedicated keys, with several options such as:-

### CONTEXT SENSITIVE

### SPEED READ

Selecting CONTEXT SENSITIVE mode allows the user to view the current document with key words highlighted. These words may have been selected by a computer program selecting all verbs, together with any words that do not start a sentence but nevertheless commence with a capital letter. The rest of the text is put into the background as described above and is represented as a string of patterns such as grey lines. Each grey line will exactly match the pattern of the text, i.e. if a textual sentence was one inch long then the grey line replacing it would be one inch long also. The thickness of the line should be the average thickness of the text. This enables the user to very quickly browse through the document. Page patterns will appear similar to the original text and graphics pages and if the user lands on a page that he/she wishes to read in detail then they can exit the abbreviated form of display provided by the invention and see the entire text.

Turning to the speed reading mode, it will be appreciated that there are numerous methods of speed reading and in practice every speed reader has a preference that they adapt for their needs. Selecting Speed Read mode could, for example, allow the user to view the current document or book with the first two words of every paragraph and first verb highlighted. Another speed reading favourite is reading just the text in the middle of the page.

The present invention can display several options of speed reading which the user can select. These options could be selected at a start up level so that when in use the user does not have too large a menu to choose from.

As in Context Sensitive mode, Speed Read mode puts background text into a generic pattern and graphics into an outline or faint style. If the user lands on a page that he/she wishes to read in detail then they can exit the abbreviated display mode provided by the invention.

## Claims

1. Method of displaying selected portions of an original document, in which the original document comprises text or graphics arranged in a layout, comprising the steps of:
dividing the original document into selected portions (21) which are to be displayed and text (22) or graphics (23) portions which are not to be displayed and are instead to be removed;
generating at least one space or pattern corresponding in length and/or shape to the text or graphics which are to be removed, each space or pattern being described by less data than is needed to describe the text or graphics which are to be removed;
displaying on a screen only the selected portions, said selected portions being arranged in the same layout that each portion had in the original document and being separated from other selected portions by at least one of said generated space or pattern.

2. Method of storing an original document, in which the original document comprises text or graphics arranged in a layout, comprising the steps of;
dividing the original document into selected portions (21) which are to be displayed and text (22) or graphics (23) portions which are not to be displayed and are instead to be removed;
generating at least one space or pattern corresponding in length and/or shape to the text or graphics which are to be removed, each space or pattern being described by less data than is needed to describe the text or graphics which are to be removed;
recording onto a recordable media the original document and said space or pattern such that the recordable media allows the display on a screen of only the selected portions of the original document, said selected portions being arranged in the same layout that each portion had in the original document and being separated from other selected portions by at least one of said generated space or pattern generated.

3. Method as claimed in either claim 1 or 2 wherein the space or pattern is stored, together with the selected portions, in a separate file from a file containing the whole document.

4. Method as claimed in either claim 1 or 2 wherein the selected portions are flagged portions of the data file representing the whole document.

5. Method as claimed in any preceding claim wherein the selected portions are selected to allow speed reading.

6. Method as claimed in any preceding claim wherein the selected portions include keywords.

7. Computer apparatus for displaying selected portions of an original document, in which the original document comprises text or graphics arranged in a layout, comprising:
a data store in which the original document is stored, the data store also storing data indicative of selected portions (21) of the original document;
a processor to generate on a display at least one space or pattern equal in length and/or shape to text (22) or graphics (23) which are to be removed from the original document, each space or pattern being described by less data than is needed to describe the text or graphics which is to be removed;
a display to display those selected portions, said selected portions being displayed in the same layout that each portion had in the original document and being separated from other selected portions by at least one of said space or pattern generated by the processor.

## Patentansprüche

1. Methode zur Anzeige ausgewählter Teile eines aus Text und Graphiken mit Layut bestehenden Originaldokumentes, welche die folgenden Schritte umfaßt:
Unterteilung des Originaldokumentes in bestimmte Teile (21), die ausgegeben werden sollen und solche Text-(22) oder Graphikteile (23), die nicht ausgegeben, sondern entfernt werden sollen;
Erzeugung mindestens eines Zwischenraums oder Musters, welche in Länge und/oder Form den Texten oder Graphiken entsprechen, die entfernt werden sollen; jeder Zwischenraum und jedes Muster wird dabei durch weniger Daten beschrieben als dies für die zu entfernenden Texte oder Graphiken notwendig ist;
Bildschirmausgabe nur der ausgewählten Teile, wobei besagte ausgewählte Teile dasselbe Layout aufweisen wie im Originaldokument und von anderen ausgewählten Teilen durch mindestens einen/eines der erzeugten Zwischenräume oder Muster getrennt werden.

2. Methode zur Speicherung eines aus Text und Graphiken mit Layout bestehenden Originaldokumentes, welche die folgenden Schritte umfaßt:
Unterteilung des Originaldokumentes in ausgewählte Teile (21), die ausgegeben werden sollen und solche Text-(22) oder Graphikteile (23), die nicht ausgegeben, sondern entfernt werden sollen;
Erzeugung mindestens eines Zwischenraums oder Musters, welche in ihrer Länge und/oder Form den Texten oder Graphiken entsprechen, die entfernt werden sollen, jeder Zwischenraum und jedes Muster wird dabei durch weniger Daten beschrieben als dies für die zu entfernenden Texte oder Graphiken notwendig ist;
Aufzeichnung des Originaldokumentes und der erwähnten Zwischenräume und Muster auf ein Aufzeichnungsmedium, welches es erlaubt, nur die ausgewählten Teile des Originaldokumentes auf den Bildschirm auszugeben, wobei besagte ausgewählte Teile dasselbe Layout aufweisen wie im Originaldokument und von anderen ausgewählten Teilen durch mindestens einen/einers der erzeugten Zwischenräume oder Muster getrennt werden.

3. Methode wie unter 1 oder 2, durch die der Zwischenraum oder das Muster zusammen mit den ausgewählten Teilen in einer anderen Datei als der, die das Originaldokument enthält, separat gespeichert werden.

4. Methode wie unter 1 oder 2, durch welche die ausgewählten Teile sich von den Daten des Gesamtdokumentes durch Markierungen absetzen lassen.

5. Methode wie alle oben erwähnten, die das schnelle Lesen ausgewählter Teile ermöglicht.

6. Methode, wie alle oben erwähnten, wobei die ausgewählten Teile Schlüsselwörter enthalten.

7. Computergerät zur optischen Ausgabe eines aus Text und Graphiken mit Layout bestehenden Originaldokuments einschließlich:
eines Datenspeichers, in dem das Originaldokument sowie solche Daten gespeichert sind, die ausgewählte Teile (21) des Originaldokumentes anzeigen;
eines Prozessors zur Erzeugung mindestens eines Zwischenraums oder Musters, welche in ihrer Länge und/oder Form den Texten (22) oder Graphiken (23) entsprechen, die aus dem Originaldokument entfernt werden sollen; jeder Zwischenraum und jedes Muster wird dabei durch weniger Daten beschrieben als dies für die zu entfernenden Texte oder Graphiken notwendig ist;
eines Displays zur Anzeige der ausgewählten Teile, wobei diese dasselbe Layout aufweisen wie im Originaldokument und von anderen ausgewählten Teilen durch mindestens einen/eines der besagten Zwischenräume oder Muster getrennt werden.

## Revendications

1. La méthode d'affichage des portions choisies d'un document original, dans laquelle le document original comporte du texte ou des graphiques mis en page d'une certaine façon, comportant les étapes suivantes:
la division du document original en portions choisies (21) devant être affichées et de portions de texte (22) ou de graphique (23) ne devant pas être affichées, mais devant être supprimées;
la génération d'au moins un espace ou d'une forme correspondant en longueur et/ou en forme au texte ou au graphique devant être supprimé, la description de chaque espace ou forme comportant moins de données que celles nécessaires pour décrire le texte ou les graphiques devant être supprimés;
l'affichage sur un écran des portions choisies uniquement, les dites portions étant mises en page de la même manière que dans le document original et étant séparées des autres portions choisies par au moins un des dits espaces ou formes générés.

2. La méthode de stockage d'un document original, dans laquelle le document original comporte du texte ou des graphiques mis en page d'une certaine façon, comportant les étapes suivantes:
la division du document original en portions choisies (21) devant être affichées et de portions de texte (22) ou de graphique (23) ne devant pas être sélectionnées, mais devant être supprimées;
la génération d'au moins un espace ou d'une forme correspondant en longueur et/ou en forme au texte ou au graphique devant être supprimé, la description de chaque espace ou forme comportant moins de données que celles nécessaires pour décrire le texte ou les graphiques devant être supprimés;
l'enregistrement du document original et des dits espaces ou formes sur un support média enregistrable de façon à ce que l'enregistrement ne permette l'affichage sur un écran que des portions choisies du document original, les dites portions étant mises en page de la même manière que dans le document original et étant séparées des autres portions choisies par au moins un des dits espaces ou formes générés.

3. La méthode revendiquée dans soit la revendication 1 ou 2, où l'espace ou la forme est stocké, avec les portions choisies, dans un fichier séparé du fichier contenant le document entier.

4. La méthode revendiquée dans soit la revendication 1 ou 2, où les portions choisies sont des portions signalées du fichier de données représentant le document entier.

5. La méthode revendiquée dans n'importe quelle revendication précédente où les portions choisies le sont de manière à permettre une lecture rapide.

6. La méthode revendiquée dans n'importe quelle revendication précédente où les portions choisies comportent des mots clés.

7. Du matériel informatique pour afficher les portions choisies d'un document original, dans lequel le document original comporte du texte ou des graphiques mis en page d'une certaine façon, comportant:
une mémorisation de données dans laquelle le document original est stocké, la mémorisation de données stockant également des indications de données des portions choisies (21) du document original;
un processeur pour générer sur un affichage au moins un espace ou une forme égal en longueur et/ou en forme au texte (22) ou au graphique (23) devant être supprimé du document original, la description de chaque espace ou forme comportant moins de données que celles nécessaires pour décrire le texte ou graphique devant être supprimé;
un écran pour afficher les portions choisies, les dites portions étant affichées selon la même mise en page que dans le document original et étant séparées des autres portions choisies par au moins un des dits espaces ou formes générés par le processeur.
